# EUROPÄISCHE PATENTSCHRIFT

(11) **EP 0 652 407 B1**
(45) Veröffentlichungstag und Bekanntmachung des Hinweises auf die Patenterteilung: **01.03.2000**
(21) Anmeldenummer: 94117638.0
(22) Anmeldetag: 09.11.1994
(51) Int. Cl.: F24F 7/04, F24F 5/00

(54) **Lüftung für Hochhäuser mit Doppelfassade**
Ventilation for high buildings
Ventilation pour batiments élevés

(30) Priorität: 10.11.1993 DE 4338209
(43) Veröffentlichungstag der Anmeldung: 10.05.1995
(73) Patentinhaber: ALCO Systeme GmbH, 48163 Münster (DE)
(72) Erfinder: Raatschen, Willigert, Dr.-Ing., D-88090 Immenstaad (DE); Kling, Jürgen, Dipl.-Ing., D-88677 Markdorf (DE)
(74) Vertreter: Habbel, Hans-Georg, Dipl.-Ing.

(56) Entgegenhaltungen:
- DE-A- 4 022 441
- DE-A- 4 032 552
- DE-A- 4 142 892

## Beschreibung

Die Erfindung betrifft die Lüftung für Hochhäuser, die mit einer Doppelfassade versehen sind.

**DE 40 22 441 C1** zeigt und beschreibt den Aufbau einer Fassade. Bei diesem Fassadentyp wird die Förderkapazität der Schächte über den thermischen Auftrieb und den durch den Wind erzeugten Unterdruck am oberen Schachtende bewirkt. Eine Umleitung der Luft von der in der Regel wärmeren Südseite zur Nordseite zur Erwärmung derselben ist ebenfalls erwähnt. Nachteilig an dieser Fassadenkonzeption ist, daß ab einer bestimmten Geschoßzahl die Förderkapazität der Schächte stark reduziert wird. Es gibt dann Geschosse, in welchem der Mindestluftwechsel nicht mehr erreicht wird und sich sogar die Strömungsrichtung umkehrt, so daß belastete Luft vom Schacht über die Überströmöffnung in den Fensterkastenbereich zurückströmt und bei geöffneten Fenstern sogar in die dahinterliegenden Räume gelangt. Für Hochhäuser ist diese Fassadenkonzeption mit durchgehenden, über Dach geöffneten Schächten somit wenig geeignet.

Andererseits ist auch die Unterbrechung der Schächte mit einer Öffnung nach außen hin nicht funktionsfähig, da hier auf der windzugewandten Gebäudeseite der am oberen Schachtende herrschende Staudruck die Luft zurück in den Schacht drücken würde.

Die DE 41 42 892 C1 beschreibt ein Verfahren und eine Vorrichtung zur Zwangsdurchlüftung einer zweischaligen Fassadenkonstruktion, wobei die zwischen der Außen- und der Innenschale befindliche Luft abgeführt werden kann, indem Zuluft in den Zwischenraum zwischen der Außen- und Innenschale zugeführt und die Fortluft aus dem Zwischenraum der Außen- und Innenschale abgeführt wird. Wenn bei dieser Anordnung keine zwangsweise Zuführung der Zuluft oder zwangsweise Abführung der Abluft erfolgt, ist diese Konstruktion winddruckabhängig, so daß es vorkommen könnte, daß bei starkem Winddruck ein Rückströmen der Luft in den Schächten erfolgt, so daß dadurch die ganze Klimatisierungsbestrebung aufgehoben würde.

Der Erfindung liegt die Aufgabe zugrunde, bei Hochhäusern eine vom Wind unabhängige, natürliche Lüftung zu erreichen, so daß auf den Einbau von Klimaanlagen weitgehend verzichtet werden kann, aber eine Rückströmung der in den Schächten fließenden Luft aufgrund des Winddruckes vermieden wird.

Diese Aufgabe wird durch den Gegenstand des Hauptanspruches gelöst.

Die Unteransprüchen betreffen vorteilhafte Ausgestaltungen der Erfindung.

Die Erfindung wird nachfolgend anhand von Figuren näher erläutert.

Es zeigen:
- Fig. 1: Rückströmung der Luft im Schacht nach unten infolge Windanströmung am oberen Schachtauslaß,
- Fig. 2: die Druckverteilung an einem Gebäudesegment,
- Fig. 3 und 4: Strömungscharakteristik einer Öffnungsphase am oeren Schachtauslaß,
- Fig. 5: ein Diagramm des Winddrucks,
- Fig. 6: Strömungscharakteristik einer Fuge,
- Fig. 7: ein Detail des Fassadenprofils,
- Fig. 8: Darstellung einer bi-direktionalen Strömung bei Temperaturunterschieden,
- Fig. 9: die konstruktive Ausgestaltung von Überströmöffnungen.

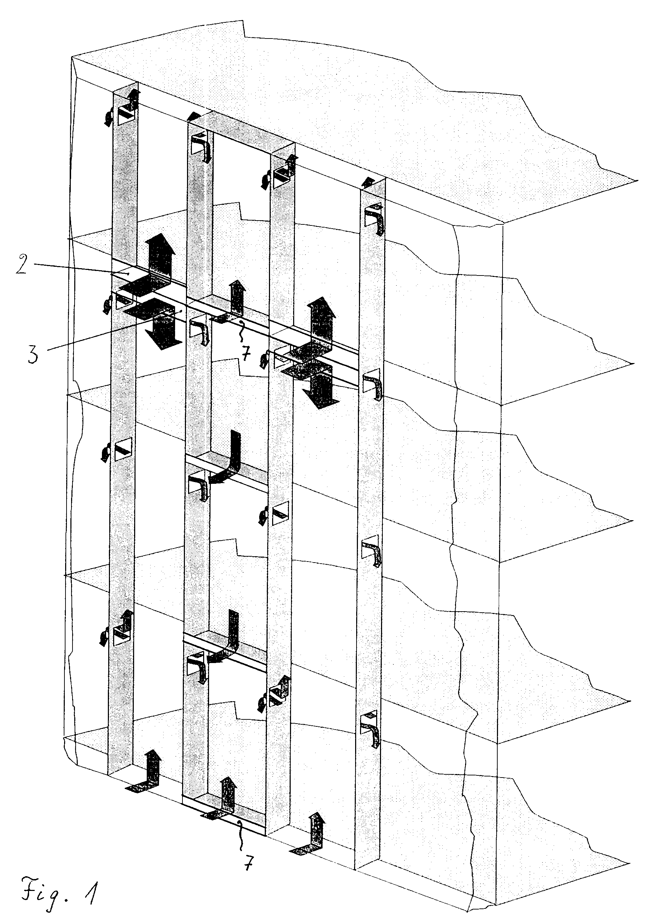

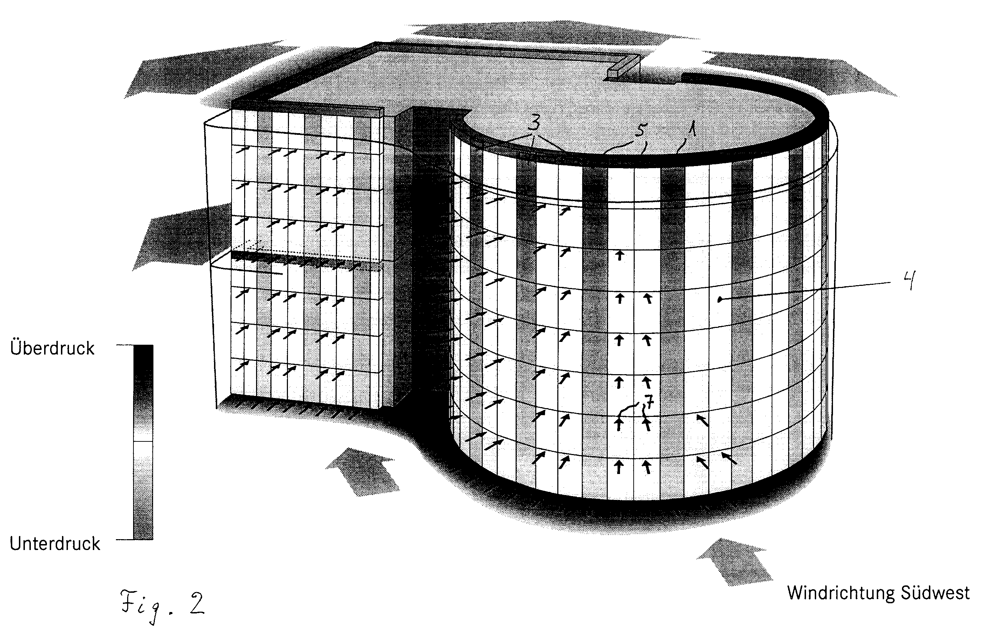

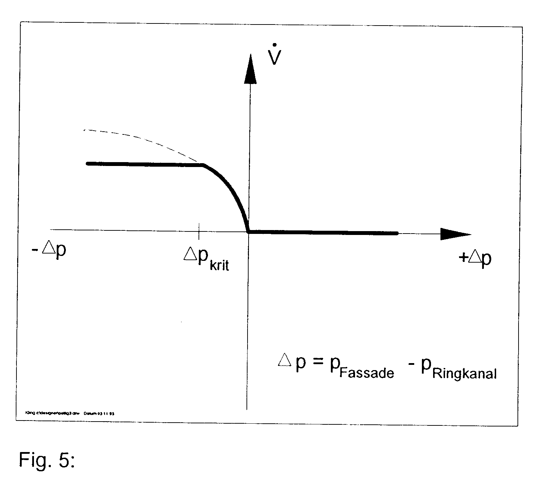

Wie aus den Figuren ersichtlich ist, wird gemäß der Erfindung das Hochhaus in Segmente **4** zu einem oder einigen Geschossen unterteilt. Hier bezeichnet Segment die Teilung des Gebäudes durch zwei horizontale Schnitte. Fig. 2, 3 und 4 zeigen ein solches Segment. Erfindungswesentliches Merkmal ist, daß die Schachtenden **3** in der Variante 1 in einen als Ringkanal ausgebildeten Sammelkanal 1 (Fig. 2) einmünden. Somit strömt die durch den Auftrieb nach oben gehende Luft nicht direkt nach draußen, sondern in den Ringkanal. Dieser ist über den Umfang verteilt mit Öffnungen **5** versehen. Funktionsfähig wird diese Fassadenkonzeption erst dann, wenn sichergestellt ist, daß im Sammelkanal 1 kein Überdruck gegenüber den Schächten besteht, damit dort keine verbrauchte Luft in den Schacht zurückströmen kann. Eine Rückströmung ist nur dann möglich, wenn der Wind auf der Luvseite in den Ringkanal drückt (siehe Fig. 1). Um dieses zu verhindern, bestehen die Öffnungen 5 nicht aus einfachen, feststehenden Öffnungen, sondern der Öffnungsquerschnitt wird nach der in Fig. 5 dargestellten Abhängigkeit vom Winddruck oder nach dem Winddruck gesteuert.

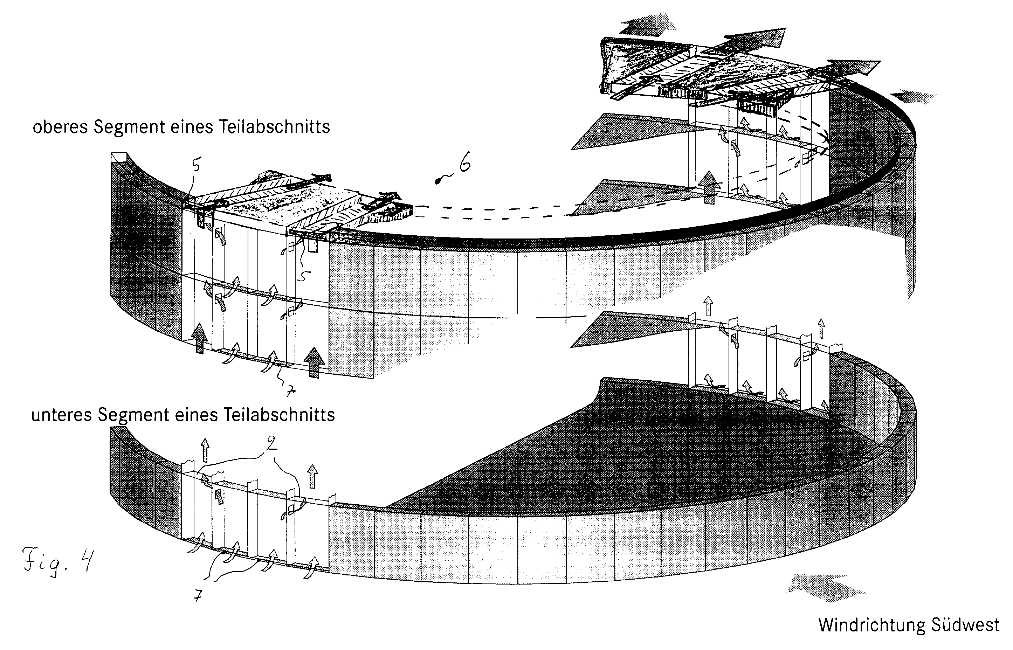

Bei der Variante 2 gemäß Fig. 4 befinden sich die vom Windruck gesteuerten Öffungen **5** im Bereich der oberen Schachtauslässe. Auf der Luvseite sind die Öffnungen geschlossen und die von den Schächten nach oben strömende Luft strömt in ein Sammelvolumen 6 eines Sammelkanales 1, um an den auf der Leeseite geöffneten Öffnungen nach außen abzuströmen.

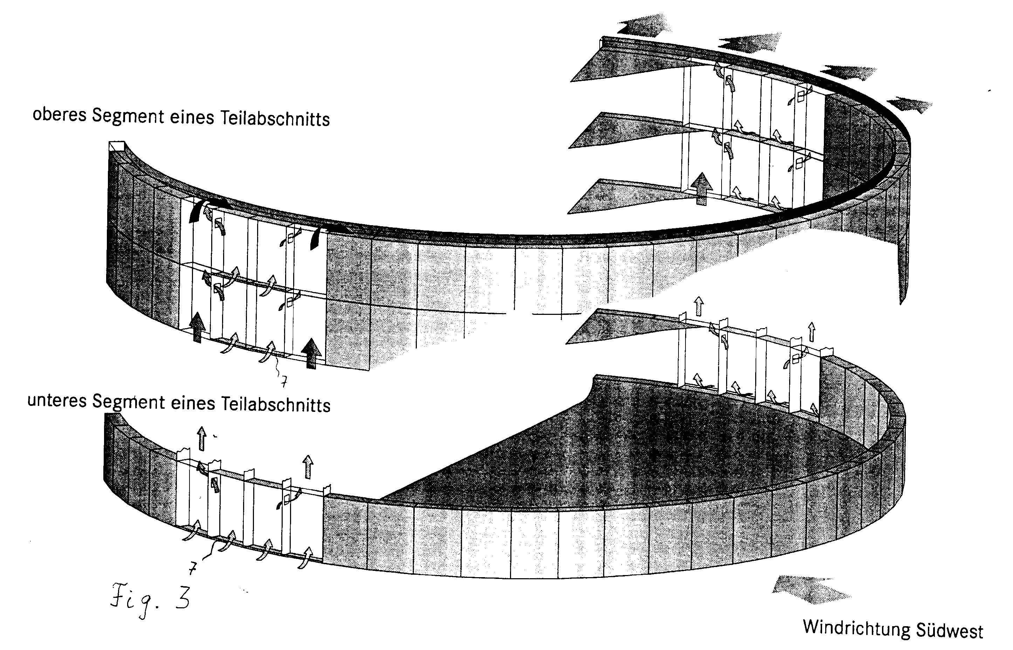

Demnach wird bei Überdruck die Öffnung verschlossen; bei Unterdruck wird der Öffnungsquerschnitt geöffnet. Der Öffnungsquerschnitt kann sich als Auffunktion/Zufunktion entsprechend dem Unterdruck/Überdruck verändern. Eine optimalere Funktionsweise erhält man durch eine zunächst stetige Vergrößerung bei Unterdruck. Vorteilhaft ist hierbei, ab einem gewissen Unterdruck Δpₖᵣᵢₜ die Querschnittsfläche konstant zu halten, um bei hohen Windgeschwindigkeiten die Strömung zu begrenzen. Die durch Thermik und Winddruck bewirkte Luftströmung in der Fassade und im Sammelkanal 1 zeigt Fig. 3 für einen Ringkanal und Fig. 4 für ein Sammelvolumen 6.

Die Luft gelangt aufgrund des thermischen Auftriebs in allen Schächten auch auf der Leeseite nach oben in den Sammelkanal 1. Auf der Luvseite sind die Öffnungen im Sammelkanal verschlossen, so daß die Luft dort zu Leeseiten des Gebäudes strömt und dort nach außen abfließt.

Bei Hochhäusern treten bekanntermaßen sehr hohe Windgeschwindigkeiten und damit sehr hohe Windüberdrücke und Windunterdrücke an den Außenflächen auf. Insbesondere würden sich bei geöffneten Fenstern an gegenüberliegenden Fassaden sehr hohe Differenzdrücke auch im Gebäudeinneren aufbauen. Die Folge bei hohen Windgeschwindigkeiten wäre, daß hierdurch das Öffnen von Innentüren erschwert würde, daß die häufig gebrauchten Leichtbautrennwände Festigkeitsprobleme hätten und der Durchzug bei geöffneten Innentüren hoch wäre. Die Doppelfassade mit Sammelkanal 1 vermindert die maximal auftretenden Druckdifferenzen im Gebäude drastisch.

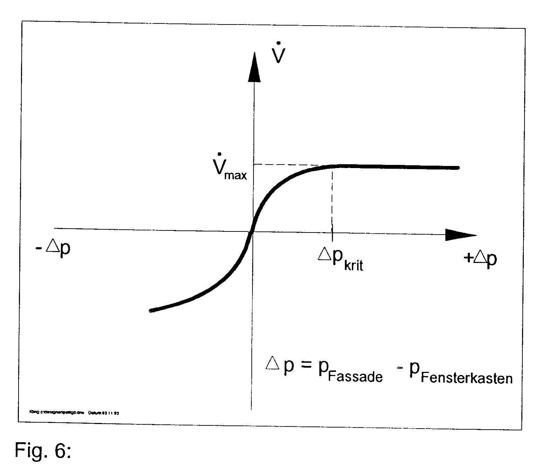

Maßgebend hierfür ist der große Druckabfall an den Fugen **7** der Fensterkästen. Um nun ein optimaleres Strömungsverhalten sowohl bei wenig Wind als auch bei starkem Sturm zu gewährleisten, werden erfindungsgemäß die Fugen an den Fensterkästen abhängig vom Winddruck gemäß Fig. 6 gesteuert. Bei Überdruck an der Fensterfuge wird der Volumenstrom ab einer Druckdifferenz ΔP'ₖᵣᵢₜ begrenzt. Dieses kann z.B. durch Verringerung des Fugenquerschnittes erfolgen.
Mit dieser Strömungscharakteristik der Fugen werden bei Hochhäusern auch bei Sturm und geöffneten Fenstern tolerable Druckdifferenzen zwischen den Räumen sichergestellt.

### Art der windabhängigen Steuerung

Wünschenswert ist eine passive, das heißt ohne Hilfsenergie betätigte Steuerung des Öffnungsquerschnittes. Auf dem Markt werden hierzu einige Varianten angeboten. Beispielhaft sei an dieser Stelle ein "low-pressure controlled air inlet" von COMPRI Aluminium bv, AB Zwijudrecht/NL, erwähnt. Dieses zeigt bei Überdruck qualitativ das richtige Verhalten, wie es hier für die Fugensteuerung in Betracht kommt; es verhält sich aber bei Unterdruck wie eine feste Fuge mit festem Querschnitt. Weiterhin ist es für den Wohnhausbereich und damit für kleine Druckdifferenzen entwickelt worden.
Es sind verschiedene Ausführungsvarianten denkbar. Genauso ist auch eine automatische aktive Steuerung der Öffnungsquerschnitte sowohl bei den Fugen als auch bei den äußeren Öffnungen des Ringkanals möglich.

### Fugensteuerung bei geschlossenen Fenstern

Um insbesondere während der kalten Jahreszeit und während der Nacht eine weitere energetische Optimierung des Gebäudes über die Doppelfassade zu erreichen, ist es sinnvoll, bei geschlossenen Fenstern auch den Öffnungsquerschnitt der jeweiligen Fuge ganz zu schließen oder auf ein Minimum zu begrenzen, um ein unnötiges Auskühlen der Gebäudehülle zu vermeiden.

### Fugensteuerung im Sommer

Im Sommer kommt es an den Fensterkästen und Schächten auf der sonnenzugewandten Seite leicht zu unerwünscht hohen Temperaturen. Zu diesen Zeiten wäre eine intensivere Durchspülung des Fensterkastens mit Außenluft günstig. Um nun einer Überhitzung in den erwähnten Bereichen entgegenzuwirken, wird der Querschnitt der Fuge oder ein zusätzlicher Öffnungsquerschnitt im unteren Fensterkastenbereich bei Temperaturen über Raumtemperaturniveau geöffnet. Hierdurch kann mehr Außenluft in den Fensterkasten gelangen und diesen auskühlen. In bestimmten Fällen kann es notwendig werden, zur Abströmung der Luft aus dem Fensterkasten zusätzlich zur Überströmöffnung auch noch im oberen Bereich des Fensterkastens eine Fuge nach außen vorzusehen, welche ebenfalls bei Fensterkastentemperaturen über Raumtemperaturniveau geöffnet wird. Auch hier ist eine einfache passive Steuerung der Lüftungsöffnungen angestrebt. Denkbar ist z.B. eine Steuerung mittels einer eines Heizkörperthermostatventils ähnlichen Vorrichtung.

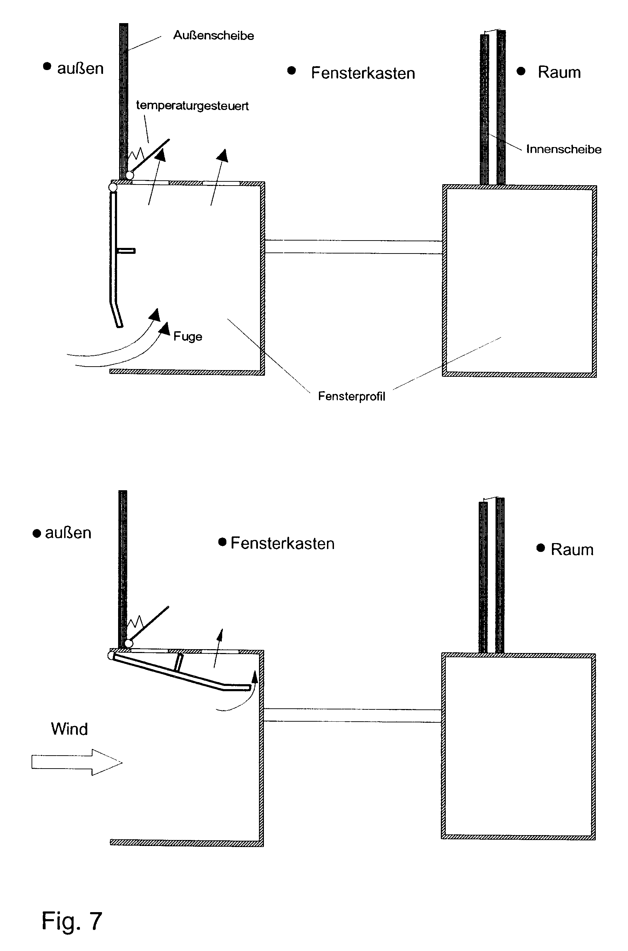

Aus sicherheitstechnischen Gründen sollte die Steuerung nach dem Wind Vorrang haben. Eine solche Vorrangsteuerung ist schematisch in Fig. 7 dargestellt.

### Ausbildung der Überströmöffnungen

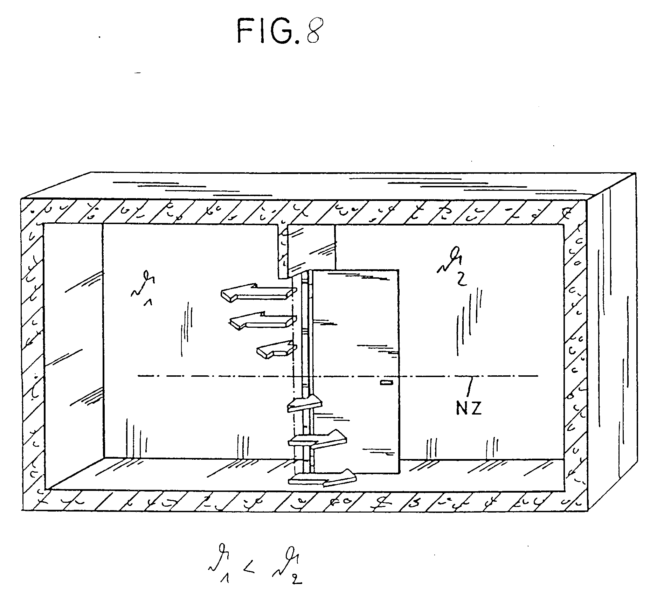

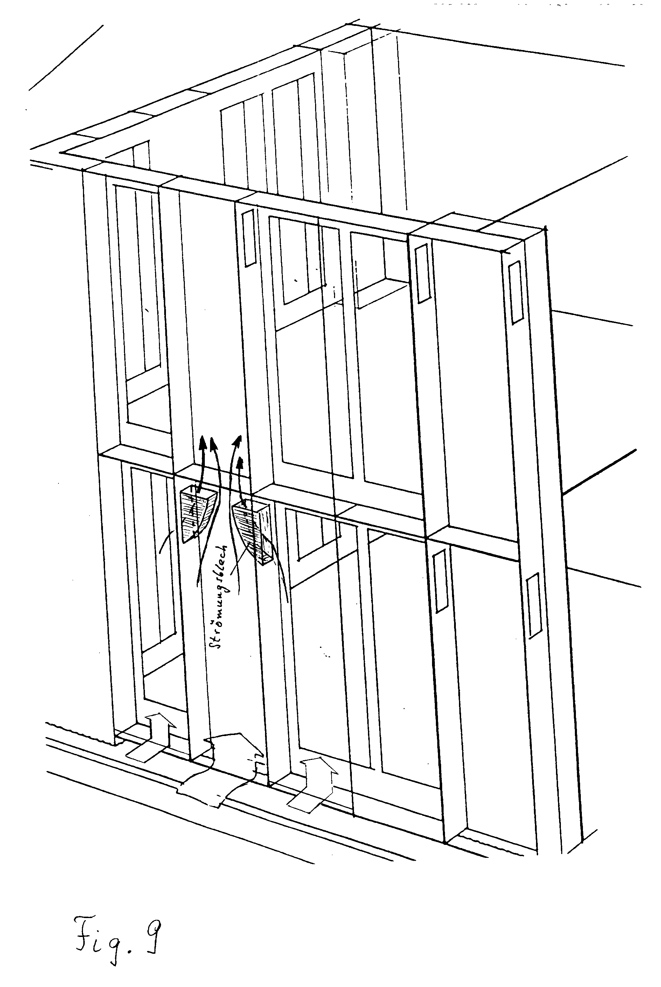

Bei großen Öffnungen werden gemäß Fig. 8 schon bei kleinen Temperaturdifferenzen namhafte Luftbewegungen in beide Richtungen auftreten. Die Rückströmung der aus den unteren Etagen im Schacht hochströmenden Abluft über die Überströmöffnungen in die oberen Fensterkästen ist nicht erwünscht und muß, insbesondere im Falle eines Brandes mit Rauchgasentwicklung, unter allen Umständen vermieden werden. Maßgebend für das Auftreten einer bi-direktionalen Strömung ist neben der Temperaturdifferenz und den Druckverhältnissen im wesentlichen die vertikale Höhe der Öffnung.
Solange wie die neutrale Zone N2 innerhalb des Öffnungsquerschnittes liegt, findet eine Strömung in beide Richtungen statt. Nun sorgt der dynamische Druck innerhalb des Schachtes durch seine Sogwirkung für eine Verschiebung der neutralen Zone nach oben, so daß mehr Luft aus dem Fensterkasten herausströmt als hinein. Bei niedrigen Luftgeschwindigkeiten in einem Schacht reicht der dynamische Druck nicht aus, um die neutrale Zone hinreichend zu verschieben. Um trotzdem das Strömungsverhalten in der gewünschten Weise zu beeinflussen, wird die Überströmöffnung konstruktiv mittels eines Strömungselementes gemäß Fig. 9 ausgeführt:
- Vorteil des Strömungselementes ist es, daß es keinen vertikalen Öffnungsquerschnitt besitzt,
- an der Stelle der Überströmöffnung wird der Schacht düseneinlaufartig verjüngt. Dieses hat bei geringem Druckverlust eine lokale Erhöhung der Auftriebsgeschwindigkeit im Schacht zur Folge, wodurch sich der dynamische Druck erhöht und noch mehr Luft aus dem Fensterkasten in den Schacht gefördert wird.

Das Risiko von Geruchstransport und Schadstofftransport und auch der Transport von wärmerer Luft aus dem Schachtbereich in den Fensterkasten werden dadurch stark vermindert.

## Patentansprüche

1. Vielgeschossiges Bauwerk mit einer Doppelfassade und luftführenden Schächten (3) innerhalb der Doppelfassade, die mit einem Sammelkanal (1) verbunden sind dadurch gekennzeichnet, daß der Sammelkanal (1) die Leeseite des Bauwerkes mit der Luvseite des Bauwerkes verbindet und mit sich nach außen öffnenden Öffnungen (5) versehen ist, um die aus den Schächten (3) in den Sammelkanal (1) strömende Luft nach außen abzuführen, wobei die Öffnungen (5) mit Vorrichtungen versehen sind, die den Eintritt von Außenluft in den Sammelkanal (1) auf der Luvseite des Bauwerkes verhindern.

2. Bauwerk nach Anspruch 1, dadurch gekennzeichnet, daß der Sammelkanal (1) ein peripher verlaufender Ringkanal ist.

3. Bauwerk nach Anspruch 1, dadurch gekennzeichnet, daß der Sammelkanal (1) durch das Gebäude hindurch verläuft und daß er ein Sammelvolumen (6) bildet.

4. Bauwerk nach einem der vorhergehenden Ansprüche, dadurch gekennzeichnet, daß der Öffnungsquerschnitt der Öffnung (5) sich als **Auf**funktion oder **Zu**funktion entsprechend dem Unterdruck bzw. Überdruck verändert.

5. Bauwerk nach Anspruch 1 mit durch Horizontalschotten und Vertikalschotten gebildeten Fensterkästen, die einen von der Luftschicht in der Doppelfassade abgegrenzten Fensterzwischenraum schaffen, der über wenigstens eine Überströmöffnung mit der Luftschicht in Verbindung bringbar ist und mit einer nach außen führenden, in ihrer Größe regelbaren Zuluftfuge ausgerüstet ist, dadurch gekennzeichnet, daß die Öffnungen an den Fugen (7) der Fensterkästen so gesteuert werden, daß eine Begrenzung des Volumenstromes ab einer bestimmten Druckdifferenz erreicht wird.

6. Bauwerk nach Anspruch 5, dadurch gekennzeichnet, daß zusätzlich im Fensterkasten oder in den Schächten (3) Öffnungen vorgesehen sind, welche über die Lufttemperatur im Fensterkasten gesteuert, geöffnet und geschlossen werden können.

7. Bauwerk nach Anspruch 5 oder 6, dadurch gekennzeichnet, daß die Fuge (7) bei geschlossenem Innenfenster im Winter ganz oder bis auf einen minimalen Öffnungsquerschnitt geschlossen, aber bei geöffnetem Fenster entsprechend voll geöffnet ist und entsprechend Anspruch 5 und/oder Anspruch 6 gesteuert wird.

8. Bauwerk nach Anspruch 5 oder 6, dadurch gekennzeichnet, daß bei Windanfall die windabhängige Steuerung Vorrang hat und damit auch bei erhöhter Fensterkastentemperatur die temperaturgesteuerte Öffnung vermindert wird.

9. Bauwerk nach Anspruch 4, dadurch gekennzeichnet, daß die Schächte (3) an den Überströmöffnungen der Fensterkästen mit düsenartigen Vorrichtungen versehen sind, welche die Strömung der Luft vom Fensterkasten in den Schacht (3) begünstigen und eine Rückströmung der Luft vom Schacht in den Fensterkasten erschweren.

## Claims

1. Multi-storey building with a double façade and ventilating shafts (3) inside the double façade which are connected to a collector duct (1), characterised in that the collector duct (1) connects the leeward side of the building to the windward side of the building and is provided with outward-opening ports (5) in order to discharge the air flowing from the shafts (3) into the collector duct (1) to the outside, the ports (5) being provided with devices which prevent air from the outside from entering the collector duct (1) on the windward side of the building.

2. Building according to claim 1, characterised in that the collector duct (1) is a peripherally extending annular duct.

3. Building according to claim 1, characterised in that the collector duct (1) runs right through the building and that it forms a collector volume (6).

4. Building according to any of the preceding claims, characterised in that the aperture of the port (5) varies as an "open" function or "close" function in accordance with the underpressure and overpressure, respectively.

5. Building according to claim 1 having window casings constituted by horizontal bulkheads and vertical bulkheads which create a window interspace delimited from the air space in the double façade, which interspace can be made to communicate with the air space via at least one overflow opening and is equipped with an air intake joint which leads to the outside and is adjustable in size, characterised in that the openings at the joints (7) of the window casings are controlled in a manner whereby a restriction of the volume flow is achieved upwards of a certain pressure differential.

6. Building according to claim 5, characterised in that additionally provided in the window casing or in the shafts (3) are openings which can be controlled, opened and closed via the air temperature in the window casing.

7. Building according to claim 5 or 6, characterised in that when the inner window is shut in winter, the joint (7) is closed completely or so as to leave only a minimum aperture, but when the window is open it is correspondingly fully opened and is controlled in accordance with Claim 5 and/or Claim 6.

8. Building according to claim 5 or 6, characterised in that when the wind is blowing hard, the wind-dependent control takes precedence and thus even when the temperature of the window casing is elevated the temperature-controlled opening is reduced.

9. Building according to claim 4, characterised in that the shafts (3) are provided at the overflow openings of the window casings with nozzle-type devices which encourage the air to flow from the window casing into the shaft (3) and make it difficult for the air to flow back from the shaft into the window casing.

## Revendications

1. Bâtiment à plusieurs étages avec double façade et cheminées de ventilation (3) à l'intérieur de la double façade, lesquelles sont raccordées par un canal commun (1), caractérisé en ce que le canal commun (1) raccorde le côté abrité du vent du bâtiment à son côté ventilé et en ce qu'il est prévu avec des ouvertures (5) s'ouvrant vers l'extérieur pour que l'air s'engouffrant dans le canal commun (1) s'échappe par celles-ci en sortie des cheminées (3), d'où les ouvertures (5) sont prévues avec un mécanisme qui empêche l'entrée de l'air extérieur dans le canal commun (1) sur le côté ventilé du bâtiment.

2. Bâtiment selon la revendication 1, caractérisé en ce que le canal commun (1) est un canal circulaire s'étendant sur la périphérie.

3. Bâtiment selon la revendication 1, caractérisé en ce que le canal commun (1) s'étend au travers de la construction et en ce qu'il forme un volume commun (6).

4. Bâtiment selon l'une des revendications précédentes, caractérisé en ce que la section transversaie d'ouverture des ouvertures (5) se modifie selon une fonction ouverture ou une fonction fermeture en rapport respectivement avec la sous-pression et la surpression.

5. Bâtiment selon la revendication 1 avec dormant de fenêtre constitué de cloisons horizontales et verticales, qui crée un volume inter-fenêtres délimité par une couche d'air enfermée dans la double façade, lequel, dans le cas d'au moins une ouverture servant à l'écoulement de l'air en excès, peut être mis en liaison avec la couche d'air et est pourvu d'une jointure d'entrée d'air de taille réglable, caractérisé en ce que les ouvertures au niveau des jointures des dormants de fenêtres sont commandées de manière telle qu'une limitation du flux volumique soit introduite à partir d'une différence de pression déterminée.

6. Bâtiment selon la revendication 5, caractérisé en ce que, de plus, dans le dormant de fenêtre ou dans les cheminées (3) sont prévues des ouvertures, lesquelles, selon la température de l'air dans le dormant de fenêtre, peuvent être commandées de manière à être ouvertes ou fermées.

7. Bâtiment selon la revendication 5 ou 6, caractérisé en ce que la jointure, dans le cas d'une fenêtre intérieure fermée en hiver, se ferme entièrement ou jusqu'à une section d'ouverture minimale mais, dans le cas d'une fenêtre ouverte, est entièrement ouverte de manière analogue, et est commandée selon la revendication 5 et/ou la revendication 6.

8. Bâtiment selon la revendication 5 ou 6, caractérisé en ce que, lors d'une rafale de vent, la commande en fonction du vent est prioritaire et, lors d'une élévation de la température du dormant de fenêtre, réduit l'ouverture à température commandée.

9. Bâtiment selon la revendication 4, caractérisé en ce que les cheminées (3), au niveau des ouvertures servant à l'écoulement de l'air en excès des dormants de fenêtres, sont prévues avec des dispositifs du type buse, lesquels favorisent le flux d'air arrivant dans la cheminée (3) en provenance du dormant de fenêtre et rendent difficile un retour d'air de la cheminée (3) vers le dormant de fenêtre.
